# EUROPEAN PATENT APPLICATION

(11) **EP 4 631 675 A1**
(43) Date of publication of application: **15.10.2025**
(21) Application number: 25168102.9
(22) Date of filing: 02.04.2025
(51) Int. Cl.: B25C 1/06, B25F 5/00

(54) **POWER TOOL CONTROL SYSTEM**

(30) Priority: 09.04.2024 US 202463631922 P
(71) Applicant: Black & Decker, Inc., New Britain, CT 06053 (US)
(72) Inventor: FRIEDMAN, Brian E., New Britian, 06053 (US); USSELMAN, Robert A, Forest Hill, 21050 (US)
(74) Representative: SBD IPAdmin

(57) **Abstract**

Certain embodiments provide a power tool comprising a motor including a flywheel, an inertial measurement unit (IMU) configured to output IMU data, and a controller coupled to the motor and the IMU. The controller is configured to process the IMU data to generate processed IMU data, detect, based on the processed IMU data, whether the power tool has been moved in a pickup motion that is associated with an imminent use of the power tool, and increase a speed of the motor to a target speed in response to the detection.

## Description

This application claims the benefit of U.S. Provisional Application Serial No. 63/631,922 (filed on April 9, 2024), the contents of which is incorporated herein by reference in its entirety.

### INTRODUCTION

The present disclosure relates to power tools, and particularly power tool control systems.

### SUMMARY

According to certain embodiments, a power tool comprises a motor including a flywheel, an inertial measurement unit (IMU) configured to output IMU data, and a controller coupled to the motor and the IMU. The controller is configured to process the IMU data to generate processed IMU data, detect, based on the processed IMU data, whether the power tool has been moved in a pickup motion that is associated with an imminent use of the power tool, and increase a speed of the motor to a target speed in response to the detection.

According to an embodiment, there is a power tool, comprising: a motor; an inertial measurement unit (IMU) configured to output IMU data; and a controller coupled to the motor and the IMU, the controller configured to: process the IMU data to generate processed IMU data, detect, based on the processed IMU data, whether the power tool has been moved in a prescribed pickup motion that is associated with an imminent use of the power tool, and increase a speed of the motor to a target speed in response to the detection.

Optionally, the target speed is less than a full operating speed of the motor.

Optionally, the IMU includes a 3-axis accelerometer, the IMU data include 3-axis acceleration data, and the processed IMU data include processed 3-axis acceleration data; and the controller is configured to detect whether the power tool has been moved in a pickup motion includes the controller being configured to: determine a first orientation vector based on the processed 3-axis acceleration data, determine a second orientation vector based on the processed 3-axis acceleration data, determine a vector dot product of the first orientation vector and the second orientation vector, and based on determining that the vector dot product exceeds a predetermined threshold, increase the speed of the motor to the target speed.

Optionally, the controller is configured to process the IMU data to generate processed IMU data includes the controller being configured to: apply a slow filter to the 3-axis acceleration data to generate slow filtered 3-axis acceleration data, and apply a fast filter to the 3-axis acceleration data to generate fast filtered 3-axis acceleration data; the controller being configured to determine the first orientation vector includes the controller being configured to normalize the slow filtered 3-axis acceleration data to generate the first orientation vector; and the controller being configured to determine the second orientation vector includes the controller being configured to normalize the fast filtered 3-axis acceleration data to generate the second orientation vector.

Optionally, the predetermined threshold is between about 0.500 and about 0.866.

Optionally, the controller is further configured to determine an angle between the first orientation vector and the second orientation vector based on the vector dot product.

Optionally, the controller is further configured to: determine an acceleration magnitude based on the 3-axis acceleration data; based on determining that the acceleration magnitude exceeds a predetermined high threshold, inhibit the increase of the speed of the motor; and based on determining that the acceleration magnitude is less than a predetermined low threshold, inhibit the increase of the speed of the motor.

Optionally, the predetermined high threshold is about 1.5 g, and the predetermined low threshold is about 0.5 g.

Optionally, the first orientation vector corresponds to a rest position of the power tool; and
the second orientation vector corresponds to a handheld position of the power tool when the vector dot product exceeds the predetermined threshold.

Optionally, the power tool further comprises: a driver blade configured to drive nails into a workpiece; and a driver blade actuator coupled to the driver blade, the driver blade actuator configured to couple the driver blade to the flywheel when a trigger or a contact trip is actuated.

Optionally, the target speed is at least 8,000 rpm.

Optionally, the target speed is preset to ensure that a speed ramp-up time of the motor is less than or equal to approximately 300 ms.

According to another embodiment, there is a power tool, comprising: a controller configured to: receive 3-axis acceleration data from a 3-axis digital accelerometer; process the 3-axis acceleration data to generate processed 3-axis acceleration data; detect, using a machine learning (ML) model and based on the processed 3-axis acceleration data, whether the power tool has been moved in a prescribed pickup motion that is associated with an imminent use of the power tool, and send an indication to a motor controller of the power tool to increase a speed of a motor to a target speed in response to the detection, wherein the ML model is trained to detect the pickup motion that is associated with an imminent use of the power tool based on ML model training data that include power tool rest events and power tool pickup events.

Optionally, the target speed is less than a full operating speed of the motor.

Optionally, the controller is configured to detect whether the power tool has been moved in a pickup motion includes the controller being configured to: determine a first orientation vector based on the 3-axis acceleration data, and determine a second orientation vector based on the 3-axis acceleration data.

Optionally, the controller is configured to process the 3-axis acceleration data to generate processed 3-axis acceleration data includes the controller being configured to: apply a slow filter to the 3-axis acceleration data to generate slow filtered 3-axis acceleration data, and apply a fast filter to the 3-axis acceleration data to generate fast filtered 3-axis acceleration data; the controller being configured to determine the first orientation vector includes the controller being configured to normalize the slow filtered 3-axis acceleration data to generate the first orientation vector; and the controller being configured to determine the second orientation vector includes the controller being configured to normalize the fast filtered 3-axis acceleration data to generate the second orientation vector.

Optionally, the controller is further configured to determine an angle between the first orientation vector and the second orientation vector.

Optionally, the first orientation vector corresponds to a rest position of the power tool; and
the second orientation vector corresponds to a handheld position of the power tool.

Optionally, the controller is further configured to: determine an acceleration magnitude based on the 3-axis acceleration data; based on determining that the acceleration magnitude exceeds a predetermined high threshold, inhibit the increase of the speed of the motor; and based on determining that the acceleration magnitude is less than a predetermined low threshold, inhibit the increase of the speed of the motor.

Optionally, the predetermined high threshold is about 1.5 g, and the predetermined low threshold is about 0.5 9.

According to an embodiment, there is provided a method for a power tool comprising a motor, an inertial measurement unit (IMU) configured to output IMU data, and a controller coupled to the motor and the IMU, the method comprising: processing the IMU data to generate processed IMU data; detecting, based on the processed IMU data, whether the power tool has been moved in a prescribed pickup motion that is associated with an imminent use of the power tool, and increasing a speed of the motor to a target speed in response to the detection.

According to an embodiment, there is provided a method for a power tool, the method comprising: receiving 3-axis acceleration data from a 3-axis digital accelerometer; processing the 3-axis acceleration data to generate processed 3-axis acceleration data; detecting, using a machine learning (ML) model and based on the processed 3-axis acceleration data, whether the power tool has been moved in a prescribed pickup motion that is associated with an imminent use of the power tool; and sending an indication to a motor controller of the power tool to increase a speed of a motor to a target speed in response to the detection, wherein the ML model is trained to detect the pickup motion that is associated with an imminent use of the power tool based on ML model training data that include power tool rest events and power tool pickup events.

### BRIEF DESCRIPTION OF THE DRAWINGS

FIG. 1 depicts a perspective view of an example power tool, in accordance with embodiments of the present disclosure.
FIGS. 2A, 2B depict an example power tool control system, in accordance with embodiments of the present disclosure.
FIG. 3A depicts an example power tool during a rest event, in accordance with embodiments of the present disclosure.
FIG. 3B depicts example IMU 3-axis accelerometer data acquired during the rest event, in accordance with embodiments of the present disclosure.
FIG. 3C depicts example IMU 3-axis angular rate data acquired during the rest event, in accordance with embodiments of the present disclosure.
FIG. 4A depicts the movement of the example power tool of FIG. 3A during a first pickup event, in accordance with embodiments of the present disclosure.
FIG. 4B depicts example IMU 3-axis accelerometer data acquired during the first pickup event, in accordance with embodiments of the present disclosure.
FIG. 4C depicts example IMU 3-axis angular rate data acquired during the first pickup event, in accordance with embodiments of the present disclosure.
FIG. 5A depicts the movement of the example power tool of FIG. 3A during a second pickup event, in accordance with embodiments of the present disclosure.
FIG. 5B depicts example IMU 3-axis accelerometer data acquired during the second pickup event, in accordance with embodiments of the present disclosure.
FIG. 5C depicts example IMU 3-axis angular rate data acquired during the second pickup event, in accordance with embodiments of the present disclosure.
FIG. 6A depicts the movement of the example power tool of FIG. 3A during a third pickup event, in accordance with embodiments of the present disclosure.
FIG. 6B depicts example IMU 3-axis accelerometer data acquired during the third pickup event, in accordance with embodiments of the present disclosure.
FIG. 6C depicts example IMU 3-axis angular rate data acquired during the third pickup event, in accordance with embodiments of the present disclosure.
FIG. 7A depicts the movement of the example power tool during a fourth pickup event, in accordance with embodiments of the present disclosure.
FIG. 7B depicts example IMU 3-axis accelerometer data acquired during the fourth pickup event, in accordance with embodiments of the present disclosure.
FIG. 7C depicts example IMU 3-axis angular rate data acquired during the fourth pickup event, in accordance with embodiments of the present disclosure.
FIG. 8 depicts an example flow chart illustrating functionality associated with a power tool control system, in accordance with embodiments of the present disclosure.
FIG. 9A depicts an example flow chart illustrating functionality associated with an example power tool controller, in accordance with embodiments of the present disclosure.
FIG. 9B depicts an example flow chart illustrating certain functionality associated with the example power tool controller, in accordance with embodiments of the present disclosure.
FIG. 10 depicts example IMU data acquired during rest and movement events, in accordance with embodiments of the present disclosure.
FIG. 11A depicts an example flow chart illustrating functionality associated with training an ML model to detect a pickup event, in accordance with embodiments of the present disclosure.
FIG. 11B depicts an example flow chart illustrating functionality associated with using an ML model to detect a pickup event, in accordance with embodiments of the present disclosure.

### DETAILED DESCRIPTION

The following description illustrates the claimed invention by way of example and not by way of limitation. The description clearly enables one skilled in the art to make and use the disclosure, describes several embodiments, adaptations, variations, alternatives, and uses of the disclosure, including what is presently believed to be the best mode of carrying out the claimed invention. Additionally, it is to be understood that the disclosure is not limited in its application to the details of construction and the arrangements of components set forth in the following description or illustrated in the drawings. The disclosure is capable of other embodiments and of being practiced or being carried out in various ways. Also, it is to be understood that the phraseology and terminology used herein is for the purpose of description and should not be regarded as limiting.

Traditional power tools are activated when the user presses a trigger and/or operating switch. Some power tools require additional time to prepare for activation, such as power tools that incorporate a flywheel to store rotational (kinetic) energy for use during operation. One example is a flywheel-based cordless nailer, which includes an electric motor with an integrated flywheel that is used to impart kinetic energy to a driver blade to drive nails into a workpiece. After the trigger or contact trip is pressed, the cordless nailer requires a variable period of time, also referred to as a delay, for the motor and integrated flywheel to spin up to the full operating speed in order to drive (or fire) a nail. The delay is based on the operating conditions of the cordless nailer, and may be perceived by the user as a delay between the trigger or contact trip being pressed by the user and the nail actually being driven into the workpiece. Consequently, some users may prefer the faster response time of a pneumatic nailer (e.g., about 200 ms), which does not suffer from motor spin-up delay (e.g., about 700 ms or longer). While elimination of the motor spin-up delay is desirable and may improve productivity, increasing the speed of the motor and integrated flywheel to the full operating speed in a very short period of time is not practical.

Embodiments of the present disclosure advantageously provide a control system that is configured to increase the speed of a motor and integrated flywheel of a cordless nailer (for example, from zero rpm to a target speed) when the user picks up the cordless nailer from a rest position and assumes a handheld position. In certain embodiments, the target speed may be the full operating speed of the motor. The detection of a pickup event (also known as pickup motion) and the spin-up of the motor without the actuation of the trigger or contact trip of the cordless nailer advantageously eliminates the perceived motor spin-up delay, and places the motor and integrated flywheel at the full operating speed when the user is ready to drive a nail into the workpiece. In some embodiments, the target speed may be lower than the full operating speed (such as 8,000 rpm where the full operating speed is 12,000 rpm). The detection of the pickup event and the spin-up of the motor without the actuation of the trigger or contact trip of the cordless nailer advantageously reduces the perceived motor spin-up delay, and places the motor and integrated flywheel at the target speed. Only a very small delay or amount of time may then be needed to spin-up the motor from the target speed to the full operating speed when the user is ready to drive a nail into the workpiece.

In certain embodiments, a control system for a cordless nailer includes, *inter alia,* a controller and a sensor system that includes a 3-axis digital accelerometer. The sensor system may include other inertial sensors, such as a 3-axis digital gyroscope, etc. The 3-axis digital accelerometer measures the gravitational force vector in a quiescent environment. The controller determines the orientation of the cordless nailer with respect to the local gravity vector in various positions, such as a rest position, a handheld position, etc. The controller determines an initial orientation in a rest position and a new orientation in a handheld position. Advantageously, the initial rest position may be any orientation with respect to local gravity vector, and the tool may be positioned in any starting orientation before moving to a hand-held position. In certain embodiments, when a change in the orientation of the cordless nailer, from the initial orientation to the new orientation, exceeds a threshold, the controller increases the speed of the motor, for example, from zero rpm to the target speed so that the cordless nailer is ready to drive a nail into the workpiece without requiring the user to wait for the motor to spin-up from zero rpm.

In certain embodiments, when the cordless nailer is disposed in a rest position, the motor is not powered and has a speed of zero rpm (or is coasting down from the full operating speed from a prior operation), and the controller determines an initial orientation with respect to the local gravity vector. The initial orientation is represented by a stable orientation vector that is based on the 3-axis acceleration data. When the user picks up and rotates the cordless nailer into a handheld position, the controller determines the new orientation with respect to the local gravity vector, and represents the new orientation by a new orientation vector that is based on the 3-axis acceleration data. When the vector dot product of the stable orientation vector and the new orientation vector is above a threshold, the controller increases the speed of the motor, for example, from zero rpm to the target speed (such as 8,000 rpm, 12,000 rpm, 15,000 rpm, 20,000 rpm, etc.) to prepare for operation by the user. The target speed may be the full operating speed of the motor, or a lower speed than the full operating speed from which the motor speed can be ramped up to the full operating speed quickly. In some existing cordless nailers, such as a framing nailer including a brushless outer-rotor motor with an integrated flywheel, the speed ramp-up time is approximately 600 ms to 800 ms. The target speed may be set to the full operating speed to essentially eliminate the motor ramp-up time upon actuation of the trigger by the operator. Alternatively, the target speed may be preset as a fraction of the full operating speed, to ensure that the motor is able to quickly ramp-up to its full speed upon actuation of the trigger by the operator (e.g., reducing the ramp up time to 100 ms to 300 ms). The desired ramp-up time of the motor and the associated target speed may vary depending on the nailing application, motor size, and other criteria. It is noted that the vector dot product of the stable orientation vector and new orientation vector is equal to the cosine of the angle between the stable orientation vector and new orientation vector. Further, applying an arccosine function (e.g., via a lookup table, a built-in controller function, etc.) to the vector dot product generates the angle between the stable orientation vector and the new orientation vector.

During the spin-up of the motor, the user may orient the cordless nailer to the workpiece. The user then actuates the trigger and contact trip to drive a nail into the workpiece, and the operation of the cordless nailer continues in the usual way. After a period of time without operation by the user (such as 6 seconds), the controller shuts down the motor, determines that the cordless nailer is again in a rest position based on the quiescence (or stillness) of the 3-axis acceleration data, and determines another initial orientation in the rest position, and so on.

In certain embodiments, the controller may be configured to operate in various states, such as an idle state when the cordless nailer is in the rest position, a spin-up state when the controller is increasing the speed of the motor to the target speed after pick-up, an operating state when the cordless nailer is ready to drive nails, etc.

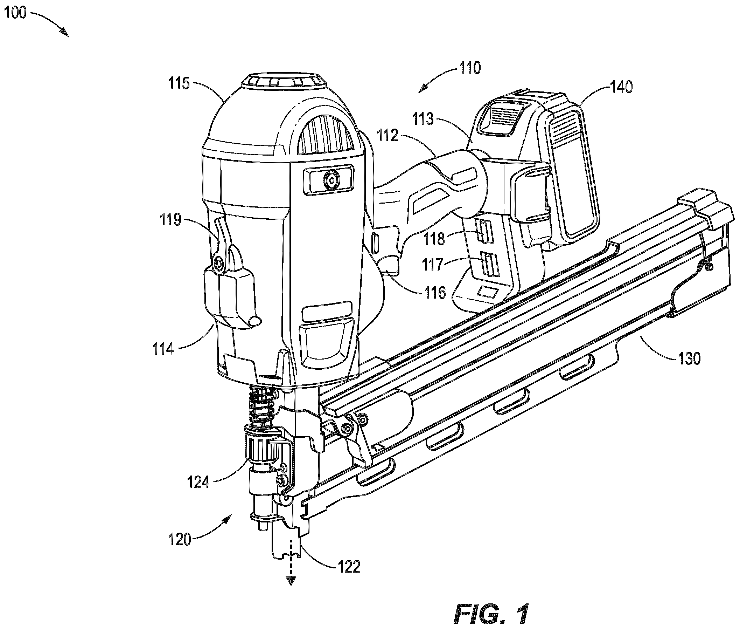

FIG. 1 depicts a perspective view of power tool 100, in accordance with embodiments of the present disclosure.

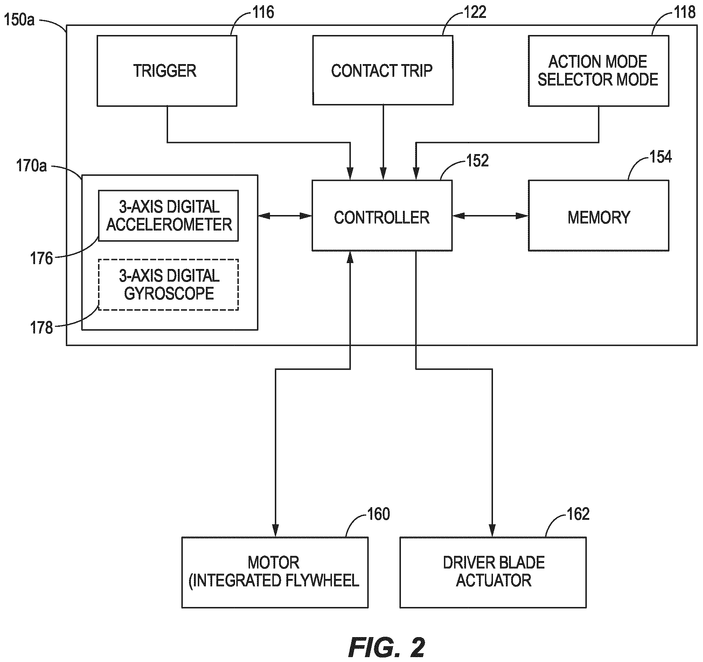

In the embodiment depicted in FIG. 1, power tool 100 is a flywheel-based, cordless nailer. Power tool 100 may include, *inter alia,* housing 110, nosepiece 120, magazine 130, removable battery pack 140, and control system 150a, 150b (contained within housing 110; see FIGS. 2A, 2B). Generally, power tool 100 drives fasteners, such as framing nails, decking nails, sheathing nails, fencing nails, etc., into wooden workpieces. Although FIG. 1 illustrates a flywheel-based, cordless nailer, other flywheel-based, cordless power tools are also supported.

Housing 110 forms handle portion 112, lower portion 113, and upper portion 114. Handle portion 112 is gripped by the user during operation, and includes trigger 116 which is actuated when pressed by the user's finger. Lower portion 113 includes speed selector switch 117, action mode selector switch 118, and a battery receptacle. Upper portion 114 houses an electric motor with an integrated flywheel, a driver blade, a driver blade actuator, a return system, return springs, as well as other components. Upper portion 114 also includes end cap 115 and stall release lever 119. End cap 115 may be removed to access certain internal components, such as the driver blade, the springs of the return system, etc. Stall release lever 119 may be actuated by the user to reset the driver blade after a jammed nail has been removed from magazine 130.

Nosepiece 120 is attached to upper portion 114, and is configured to guide the nails into the workpiece during operation. Nosepiece 120 is also configured to adjust the depth to which each nail is driven based on the position of depth adjustment wheel 124. Nosepiece 120 includes spring-loaded contact trip 122, which is actuated when the user presses contact trip 122 against the workpiece by moving power tool 100 into the proper position. Trigger 116 and contact trip 122 function in combination to engage the motor and then drive the nail based on the action mode selected by action mode selector switch 118.

Magazine 130 stores and feeds nails into nosepiece 120. The nails may be configured as a nail strip with a number of attached nails, such as 20 nails, 30 nails, 40 nails, 50 nails, etc. One nail strip is fed into magazine 130 at a time, and power tool 100 may operate until a minimum number of nails remain in magazine 130, such as 0 nails, 2 nails, 4 nails, etc.

Battery pack 140 provides the electrical power for power tool 100, such as a 20V max lithium-ion power tool battery pack, etc. The battery receptacle within lower portion 113 includes two side walls, and each side wall includes a lower rail that is configured to engage an upper channel of battery pack 140. More particularly, the lower rails of the side walls are configured to slidingly engage with, and guide, the upper channels of battery pack 140 into a locked position with power tool 100. Battery pack 140 may be unlocked and removed from the battery receptacle (or remain in the locked position) as needed for recharging.

Control system 150a, 150b controls the operation of power tool 100 based on the setting of action mode selector switch 118, the actuation of trigger 116, and the actuation of contact trip 122. To drive a nail into a workpiece, the user depresses trigger 116 and pushes contact trip 122 against the workpiece in a particular sequence that depends on the action mode that is selected by action mode selector switch 118. Additionally, control system 150a, 150b controls the full operating speed of the motor based on the setting of speed selector switch 117, which allows the user to select between a first full operating speed for driving shorter nails (such as 15,000 rpm for driving 2 inch nails), and a second full operating speed for driving longer nails and more rigorous applications (such as 20,000 rpm for driving nails longer than 2 inches).

In certain embodiments, action mode selector switch 118 selects between a sequential action mode and a bump action mode. The sequential action mode may be used for intermittent nailing where careful and accurate placement and depth control is desired, and provides enough power for driving the longest nails. The bump action mode may be used for rapid nailing on flat, stationary surfaces, and may be most effective for applications that require driving shorter nails.

To operate power tool 100 in the sequential action mode, the user sets action mode selector switch 118 to the sequential action mode setting, and presses contact trip 122 against the workpiece. In response, control system 150a, 150b engages the motor, which spins up to full operating speed after a brief delay (typically less than 1 second). The user then presses trigger 116, and control system 150a, 150b releases the driver blade, which engages the flywheel of the motor and is propelled forward to drive the nail into the workpiece. The user then releases trigger 116 and lifts contact trip 122 from the workpiece to reset power tool 100 for the next operation. The motor coasts down until contact trip 122 is pressed against the workpiece again. The motor may coast down to zero rpm, or the motor may be rotating at a residual speed when the contact trip 122 is pressed against the workpiece again, which reduces the delay until the next nail may be driven into the workpiece. The sequential action mode requires that the user release trigger 116 and lift contact trip 122 from the workpiece to reset power tool 100 before each nail is driven.

To operate power tool 100 in the bump action mode, the user sets action mode selector switch 118 to the bump action mode setting. When bump action mode is selected, the user may manipulate the power tool 100 according to a place actuation method or a bump actuation method.

To use the place actuation method, the user presses contact trip 122 against the workpiece. In response, control system 150a, 150b engages the motor, which spins up to full operating speed after a brief delay. The user then presses trigger 116, and control system 150a, 150b releases the driver blade, which engages the flywheel of the motor and is propelled forward to drive the nail into the workpiece. As long as the user presses contact trip 122 against the workpiece, a nail will be driven each time the user presses trigger 116, and control system 150a, 150b will continue to engage the motor, which does not have an opportunity to coast down to zero rpm. The place actuation method allows the user to drive multiple nails in sequence without lifting contact trip 122.

To use the bump actuation method, the user presses trigger 116. In response, control system 150a, 150b engages the motor, which spins up to full operating speed after a brief delay. The user then presses contact trip 122 against the workpiece. In response, control system 150a, 150b releases the driver blade, which engages the flywheel of the motor and is propelled forward to drive the nail into the workpiece. As long as the user presses trigger 116, a nail will be driven each time the user presses contact trip 122, and control system 150a, 150b will continue to engage the motor, which does not have an opportunity to coast down to zero rpm. The bump actuation method allows the user to drive multiple nails in sequence without releasing trigger 116.

FIGS. 2A, 2B depict control systems 150a, 150b for a power tool, such as power tool 100, in accordance with embodiments of the present disclosure.

In the embodiment depicted in FIG. 2A, control system 150a includes controller 152, memory 154, and IMU 170a, as well as several input devices such as trigger 116, contact trip 122, and action mode selector switch 118. Controller 152 may be a microcontroller, a microprocessor, an application integrated circuit (ASIC), a field-programmable gate array (FPGA), etc. Controller 152 is coupled to motor 160 and drive blade actuator 162 which causes the drive blade to engage the flywheel and drive the nail. Generally, IMU 170a is a sensor system that includes 3-axis digital accelerometer 176 (such as a micro-electromechanical system (MEMS) 3-axis digital accelerometer), and may include other sensors, such as a 3-axis digital gyroscope 178, etc. In the embodiment of FIG. 2A, controller 152 is configured to detect a pickup event based at least on 3-axis digital accelerometer data and/or 3-axis gyroscope data provided by IMU 170a, and then send a signal to motor 160 to spin-up to the target speed.

FIG. 2B illustrates an alternative embodiment, in which control system 150b includes IMU 170b that is configured to not only generate IMU data, including 3-axis digital accelerometer data and/or 3-axis gyroscope data, but also detect a pickup event itself. In particular, in the embodiment depicted in FIG. 2B, control system 150b includes many of the same components as control system 150a, such as trigger 116, contact trip 122, action mode selector switch 118, controller 152, and memory 154. Control system 150b also includes IMU 170b, which includes ML controller 172, memory 174, 3-axis digital accelerometer 176, and 3-axis digital gyroscope 178. ML controller 172 is communicatively coupled to controller 152. In the embodiments of FIG. 2B, ML controller 172 may be configured to detect a pickup event based on IMU data (e.g., 3-axis digital accelerometer data and/or 3-axis gyroscope data provided by 3-axis digital accelerometer 176 and 3-axis digital gyroscope 178, respectively) and provide an indication of the detected pickup event to controller 152. In response, controller 152 may be configured to send a signal to motor 160 to spin-up to the target speed. ML controller 172 is configured to execute one or more machine learning (ML) models to detect the pickup event. IMU 170a and 170b may collectively be referred to as IMU 170.

With respect to control system 150a (FIG. 2A), 3-axis digital accelerometer 176 measures linear acceleration in units of g (or mg) in three orthogonal axes, i.e., a 1^{st} axis (such as an X-axis), a 2^{nd} axis (such as a Y-axis), and a 3^{rd} axis (such as a Z-axis). The linear acceleration measurement range may be greater than ± 2 g, such as ± 3 g, ..., ± 10 g, and so on. The 3-axis digital accelerometer 176 outputs a digital signal that includes the measured acceleration level for each axis, and is coupled to a digital interface of controller 152, such as a time division multiplexing (TDM) interface. Generally, the axes of the 3-axis digital accelerometer 176 are not required to align with any predefined axes of housing 110. In other words, the 1^{st} axis, the 2^{nd} axis, and the 3^{rd} axis may be in any orientation with respect to housing 110.

The 3-axis digital accelerometer 176 may measure vector forces at, for example, a rate of about 20 Hz to about 50 Hz. The response time of control system 150a depends, at least in part, on the measurement rate of the 3-axis digital accelerometer 176, and detection of the pickup event may require about five accelerometer measurements. As subsequently described in paragraph 0102, a fast IIR LPF may be applied to each axis of the 3-axis accelerometer data to generate fast filtered 3-axis accelerometer data. The fast IIR LPF attenuates undesirable high frequency noise from the 3-axis accelerometer data, which may be caused by physical vibrations and fast motion of power tool 100. For example, five accelerometer measurements at a 30 Hz measurement rate may provide a detection time of about 167 ms (plus processing time).

The 3-axis digital gyroscope 178 may measure angular rate in units of degrees per second (deg/sec) (or millidegrees per second, mdps) in the same three orthogonal axes. The angular rate measurement range may be ± 100 dps, ± 200 dps, ..., ± 1000 dps, etc. The 3-axis digital gyroscope 178 outputs a digital signal that includes the measured angular rates for each axis, and is coupled to a digital interface of controller 152, such as a TDM interface.

With respect to control system 150b (FIG. 2B), the 3-axis digital accelerometer 176 measures linear acceleration in units of g (or mg) in three orthogonal axes, i.e., a 1^{st} axis (such as an X-axis), a 2^{nd} axis (such as a Y-axis), and a 3^{rd} axis (such as a Z-axis). The linear acceleration measurement range may be greater than ± 2 g, such as ± 3 g, ..., ± 10 g, and so on. Similarly, 3-axis digital gyroscope 178 measures angular rate in units of degrees per second (deg/sec) (or millidegrees per second, mdps) in the same three orthogonal axes. The angular rate measurement range may be ± 100 dps, ± 200 dps, ..., ± 1000 dps, etc.

Generally, IMU 170b outputs 3-axis acceleration data and 3-axis angular rate data to ML controller 172 at a particular output data rate, such as 100 Hz, 200 Hz, 400 Hz, 800 Hz, 1600 Hz, etc. In certain embodiments, the output data rate may be 200 Hz or lower to minimize power consumption. In certain embodiments, IMU 170b outputs sensor data that includes both 3-axis acceleration data and 3-axis angular rate data, while in other embodiments, IMU 170b outputs sensor data that includes either 3-axis acceleration data or 3-axis angular rate data. For example, ML controller 172 may enable the 3-axis digital accelerometer and disable the 3-axis digital gyroscope to conserve power.170b

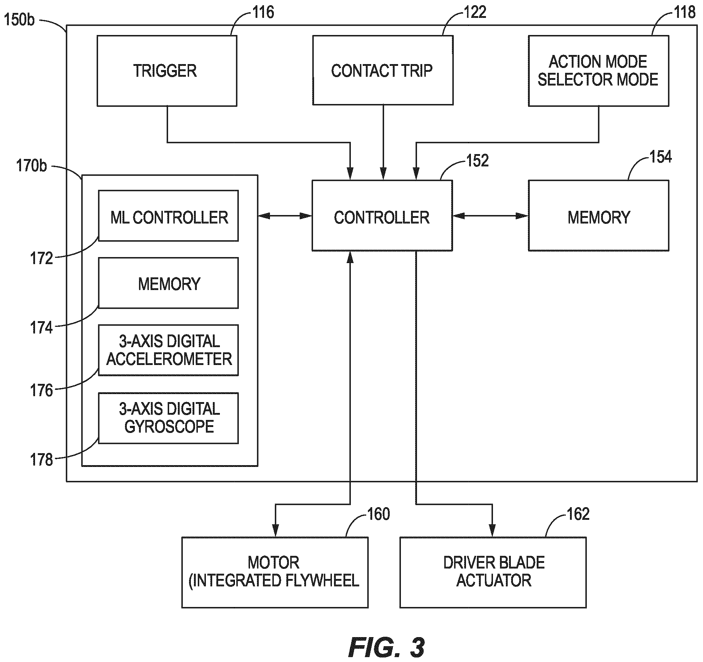

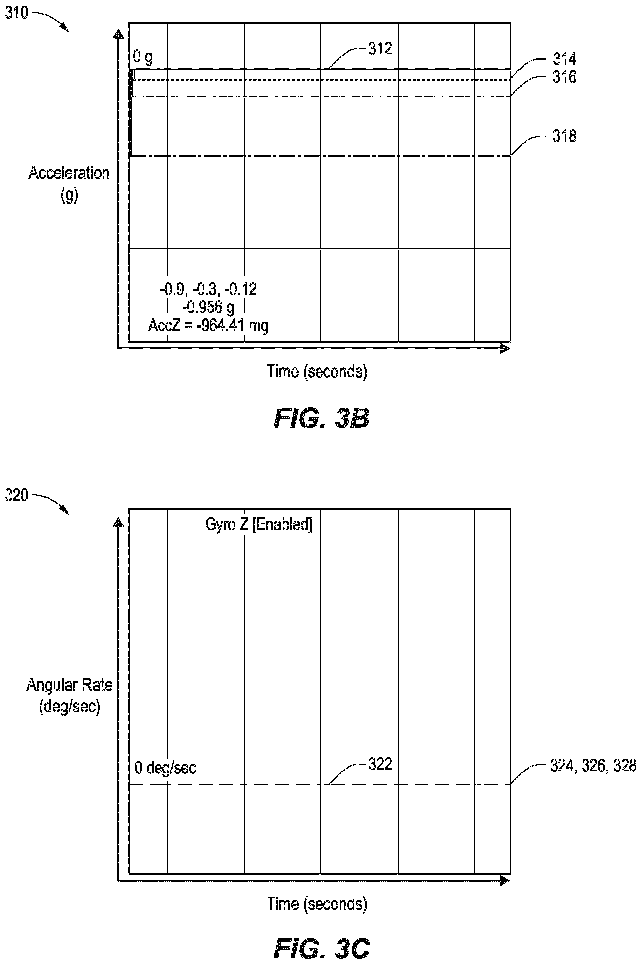

As discussed above, control system 150a, 150b may be configured to increase the speed of motor 160 from a non-powered state (e.g., zero rpm) to the target speed when the user picks up power tool 100 from a rest position and assumes a handheld position that is associated with an imminent use. Inertial sensor data, such as 3-axis digital accelerometer data, etc., may be used to determine when power tool 100 is picked up by the user. FIGS. 3B and 3C, 4B and 4C, 5B and 5C, 6B and 6C, and 7B and 7C illustrate IMU sensor data obtained during a rest event and four exemplary pickup events (respectively) by attaching an IMU (such as the one described above) to an example power tool 100.

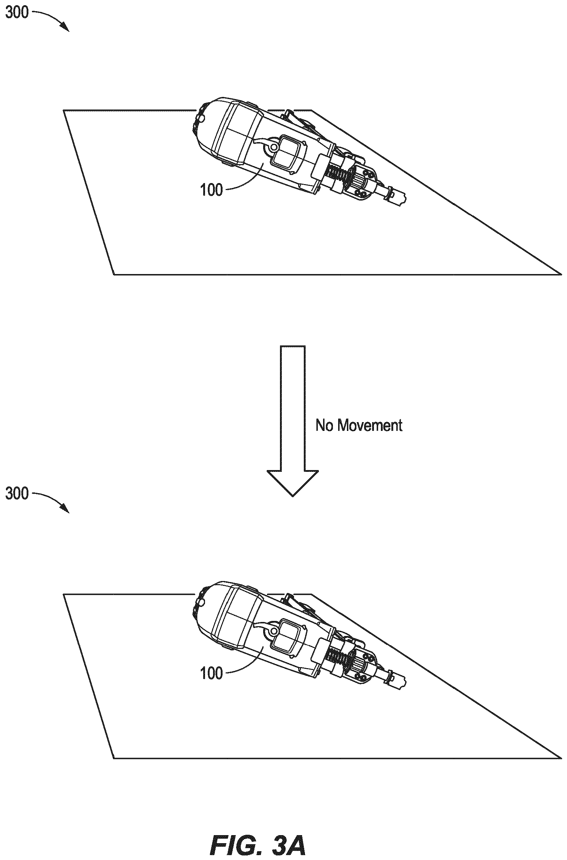

As described in further detail below in relation to FIG. 3A, power tool 100 remains in rest position 300 during the entire rest event. Each pickup event begins at rest position 300, and proceeds to different handheld positions 400, 500, 600, 700. The final orientation of each handheld position 400, 500, 600, 700 is produced by rotating power tool 100 about different axes, which simulates different pickup events by the user in preparation for operation. Various characteristics of the IMU sensor data are discussed below.

FIG. 3A depicts the power tool 100 during a rest event, FIG. 3B depicts IMU 3-axis accelerometer data acquired during the rest event, and FIG. 3C depicts IMU 3-axis angular rate data acquired during the rest event.

During the rest event, power tool 100 is not moved from rest position 300.

IMU sensor data plot 310 presents example 3-axis acceleration data (g) over time (about 3 seconds) including 1^{st} axis acceleration data 314, 2^{nd} axis acceleration data 316, and 3^{rd} axis acceleration data 318. Reference line 312 provides a reference to 0 g. The acceleration data for each axis falls below reference line 312, which indicates that the acceleration data for each axis is negative. Since power tool 100 is quiescent during the rest event, the 3-axis acceleration data measures three orthogonal components of the local gravity vector. In the example of FIG. 3B, the magnitude of the measured acceleration vector is about -0.964 g, which is consistent with power tool 100 being quiescent during the rest event. Generally, the 3-axis acceleration data represent the orientation of power tool 100 in rest position 300.

IMU sensor data plot 320 presents example 3-axis angular rate data (deg/sec) over time (about 3 seconds) including 1^{st} axis angular rate data 324, 2^{nd} axis angular rate data 326, and 3^{rd} axis angular rate data 328. Reference line 322 provides a reference to 0 deg/sec. The angular rate data for each axis falls directly on reference line 322, which indicates that the angular rate data for each axis is zero. These data are consistent with power tool 100 being quiescent while in rest position 300.

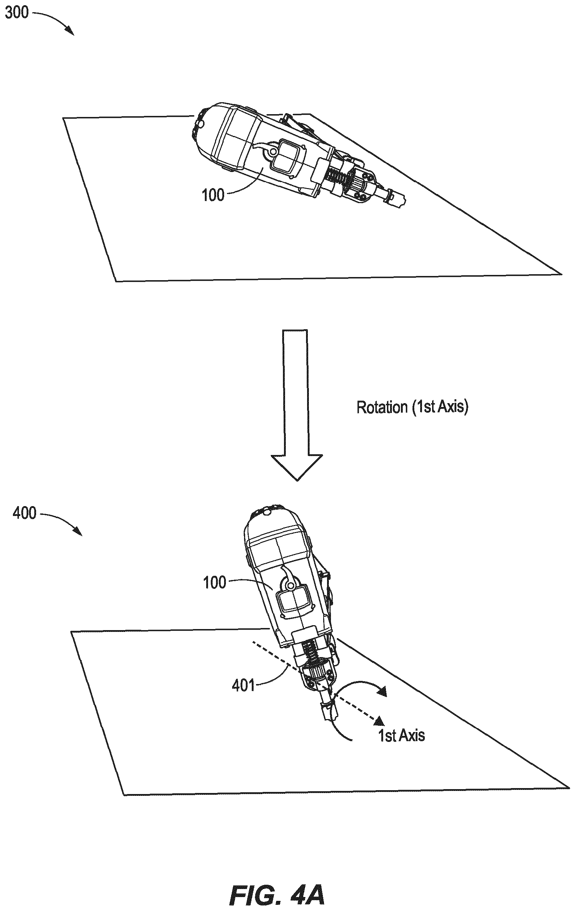

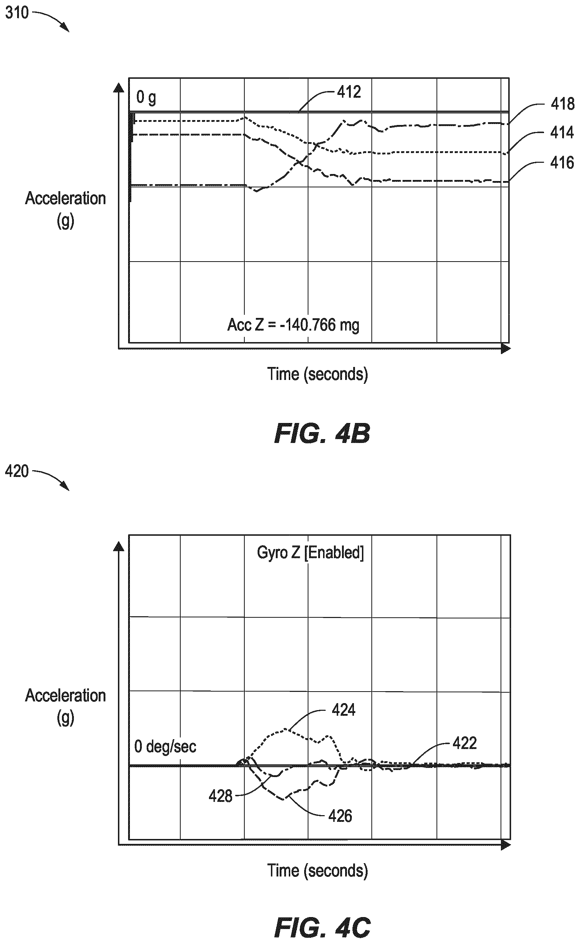

FIG. 4A depicts the movement of power tool 100 during a first pickup event, FIG. 4B depicts IMU 3-axis accelerometer data acquired during the first pickup event, and FIG. 4C depicts IMU 3-axis angular rate data acquired during the first pickup event.

During the first pickup event, power tool 100 is moved from rest position 300 to handheld position 400 by rotating power tool 100 about 1^{st} axis 401 (generally from left to right).

IMU sensor data plot 410 presents 3-axis acceleration data (g) over time (about 3 seconds) including 1^{st} axis acceleration data 414, 2^{nd} axis acceleration data 416, and 3^{rd} axis acceleration data 418. Reference line 412 provides a reference to 0 g.

During the initial second, the acceleration data for each axis falls below reference line 412, and generally aligns with the acceleration data presented in IMU sensor data plot 310. More particularly, 1^{st} axis acceleration data 414 aligns with 1^{st} axis acceleration data 314, 2^{nd} axis acceleration data 416 aligns with 2^{nd} axis acceleration data 316, and 3^{rd} axis acceleration data 418 aligns with 3^{rd} axis acceleration data 318. The 3-axis acceleration data represent the orientation of power tool 100, and confirm that power tool 100 is disposed in rest position 300 during the initial second.

During the next second, the acceleration data reflect the rotation of power tool 100 about 1^{st} axis 401 from rest position 300 to handheld position 400. More particularly, 1^{st} axis acceleration data 414 changes from a negative value to a larger negative value, 2^{nd} axis acceleration data 416 changes from a negative value to a larger negative value, and 3^{rd} axis acceleration data 418 changes from a negative value to a smaller negative value.

During the final second, the 3-axis acceleration data stabilize, and represent the orientation of power tool 100 in handheld position 400. As explained in more detail below, the change in the orientation of power tool 100 from rest position 300 to handheld position 400 may be determined from the dot product of the normalized 3-axis acceleration data for rest position 300 and the normalized 3-axis acceleration data for handheld position 400. When the change in the orientation of power tool 100 from rest position 300 to handheld position 400 is greater than a threshold, then a pickup event associated with an imminent use of power tool 100 is detected, and controller 152 spins up motor 160 to the target speed. As described above, motor 160 may have a speed of zero rpm, or motor 160 may be coasting down from the full operating speed from a prior operation. Conversely, when the change in the orientation of power tool 100 from rest position 300 to handheld position 400 is less than the threshold, then an event (such as a pickup or other event) has been detected that is not associated with an imminent use of power tool 100.

IMU sensor data plot 420 presents 3-axis angular rate data (deg/sec) over time (about 3 seconds) including 1^{st} axis angular rate data 424, 2^{nd} axis angular rate data 426, and 3^{rd} axis angular rate data 428. Reference line 422 provides a reference to 0 deg/sec.

During the initial second, the angular rate data for each axis falls directly on reference line 422, which indicates that the angular rate data for each axis is zero. These data are consistent with the power tool 100 being quiescent while in rest position 300. In other words, due to the absence of angular motion in rest position 300, the angular rate data does not provide an indication of the orientation of power tool 100.

During the next second, the angular rate data reflect the rotation of power tool 100 about 1^{st} axis 401 from rest position 300 to handheld position 400. More particularly, 1^{st} axis angular rate data 424 rises to a local positive peak value and then returns to zero, 2^{nd} axis angular rate data 426 falls to a local negative peak value and then returns to zero, and 3^{rd} axis angular rate data 428 fluctuates about zero. In other words, 1^{st} axis angular rate data 424 shows a positive swing, 2^{nd} axis angular rate data 426 shows a negative swing, and 3^{rd} axis angular rate data 428 is nearly flat. In this example, because the rotation about 3^{rd} axis 403 is simply fluctuating about zero with a relatively small magnitude, the larger magnitude rotations about 1^{st} axis 401 and 2^{nd} axis 402 indicate that the rotation axis is generally in a plane defined by 1^{st} axis 401 and 2^{nd} axis 402.

During the final second, the angular rate data stabilize at about zero. These data are consistent with the power tool 100 being quiescent while in handheld position 400.

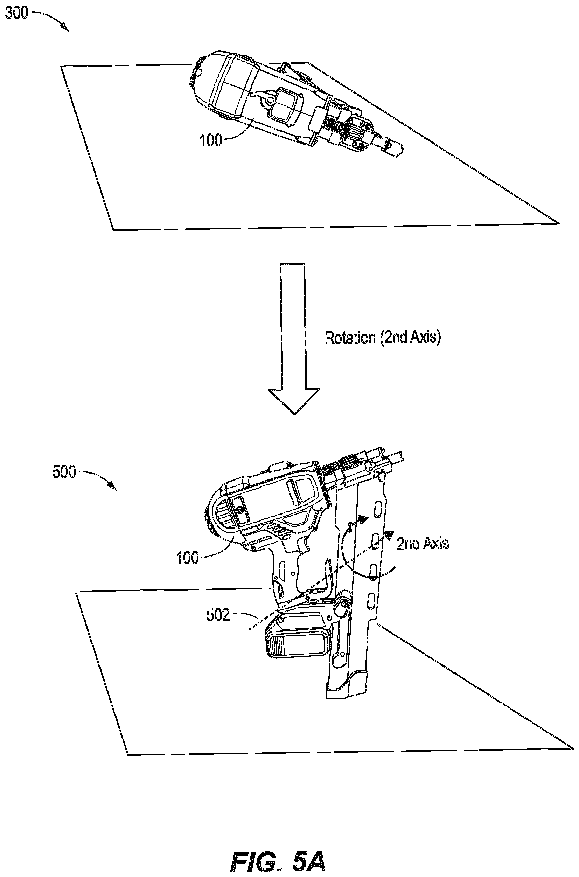

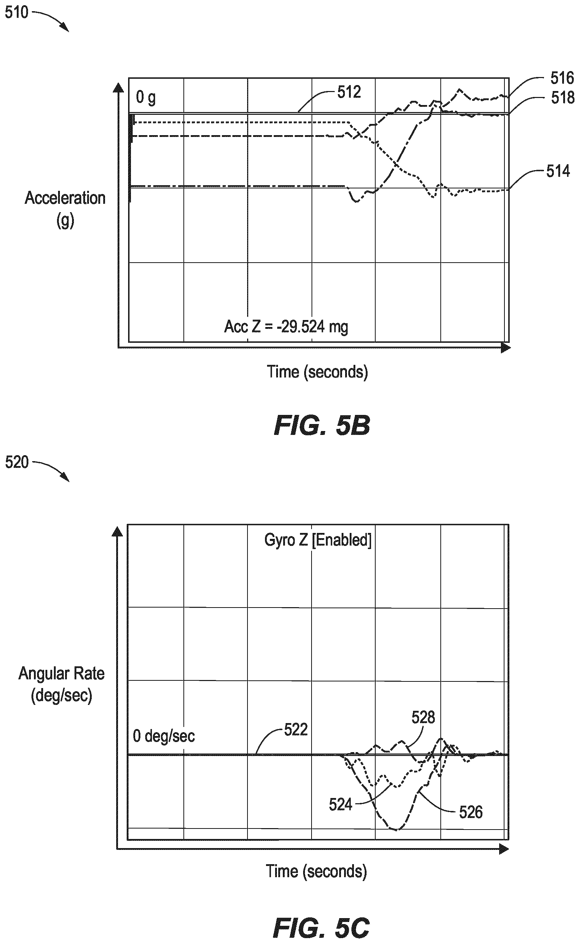

FIG. 5A depicts the movement of power tool 100 during a second pickup event, FIG. 5B depicts IMU 3-axis accelerometer data acquired during the second pickup event, and FIG. 5C depicts IMU 3-axis angular rate data acquired during the second pickup event.

During the second pickup event, power tool 100 is moved from rest position 300 to handheld position 500 by rotating power tool 100 about 2^{nd} axis 502 (generally from front to back).

IMU sensor data plot 510 presents 3-axis acceleration data (g) over time (about 3 seconds) including 1^{st} axis acceleration data 514, 2^{nd} axis acceleration data 516, and 3^{rd} axis acceleration data 518. Reference line 512 provides a reference to 0 g.

During the initial 1.75 seconds, the acceleration data for each axis falls below reference line 512, and generally aligns with the acceleration data presented in IMU sensor data plot 310. More particularly, 1^{st} axis acceleration data 514 aligns with 1^{st} axis acceleration data 314, 2^{nd} axis acceleration data 516 aligns with 2^{nd} axis acceleration data 316, and 3^{rd} axis acceleration data 518 aligns with 3^{rd} axis acceleration data 318. The 3-axis acceleration data represent the orientation of power tool 100, and confirm that power tool 100 is disposed in rest position 300 during the initial 1.75 seconds.

During the next 0.75 seconds, the acceleration data record the rotation of power tool 100 about 2^{nd} axis 502 from rest position 300 to handheld position 500. More particularly, 1^{st} axis acceleration data 514 changes from a negative value to a larger negative value, 2^{nd} axis acceleration data 516 changes from a negative value to a positive value, and 3^{rd} axis acceleration data 518 changes from a negative value to about zero (indicating an orientation that is orthogonal to the local gravity vector).

During the final 0.5 seconds, the 3-axis acceleration data stabilize, and represent the orientation of power tool 100 in handheld position 500. As explained in more detail below, the change in the orientation of power tool 100 from rest position 300 to handheld position 500 may be determined from the dot product of the normalized 3-axis acceleration data for rest position 300 and the normalized 3-axis acceleration data for handheld position 500. When the change in the orientation of power tool 100 from rest position 300 to handheld position 500 is greater than a threshold, then a pickup event that is associated with an imminent use of power tool 100 is detected, and controller 152 spins up motor 160 to the target speed. As described above, motor 160 may have a speed of zero rpm, or motor 160 may be coasting down from the full operating speed from a prior operation. Conversely, when the change in the orientation of power tool 100 from rest position 300 to handheld position 500 is less than the threshold, then an event (such as a pickup or other event) has been detected that is not associated with an imminent use of power tool 100.

IMU sensor data plot 520 presents 3-axis angular rate data (deg/sec) over time (about 3 seconds) including 1^{st} axis angular rate data 524, 2^{nd} axis angular rate data 526, and 3^{rd} axis angular rate data 528. Reference line 522 provides a reference to 0 deg/sec.

During the initial 1.75 seconds, the angular rate data for each axis falls directly on reference line 522, which indicates that the angular rate data for each axis is zero. These data are consistent with the power tool 100 being quiescent while in rest position 300.

During the next 0.75 seconds, the angular rate data reflect the rotation of power tool 100 about 2^{nd} axis 502 from rest position 300 to handheld position 500. More particularly, 1^{st} axis angular rate data 524 falls to (and fluctuates about) a local negative peak value and then returns to zero, 2^{nd} axis angular rate data 526 falls to a local negative peak value and then returns to zero, and 3^{rd} axis angular rate data 528 generally fluctuates about zero.

During the final second, the angular rate data stabilize about zero. These data are consistent with the power tool 100 being quiescent while in handheld position 500.

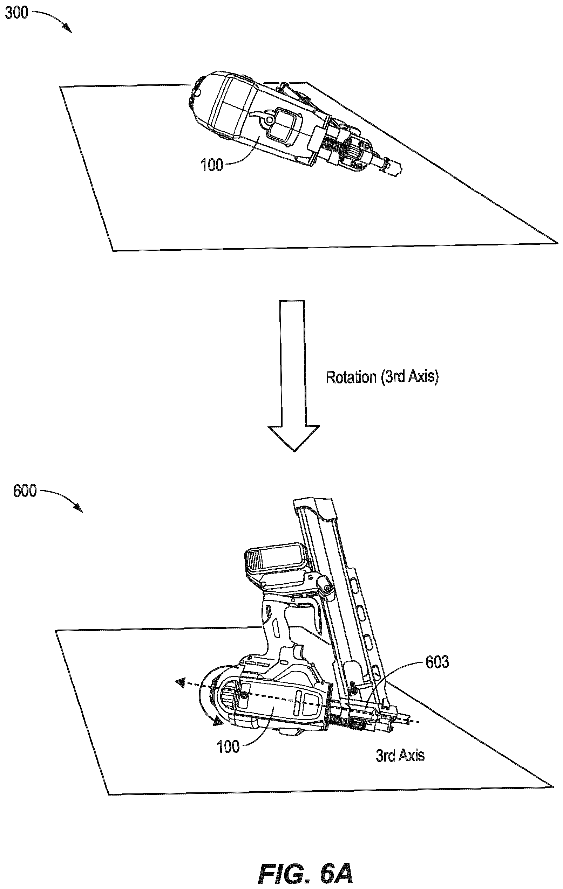

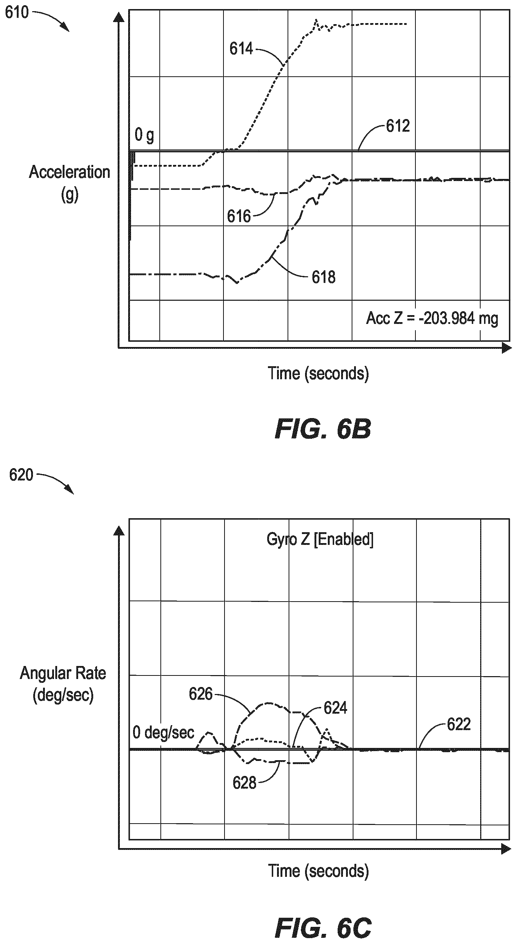

FIG. 6A depicts the movement of power tool 100 during a third pickup event, FIG. 6B depicts IMU 3-axis accelerometer data acquired during the third pickup event, and FIG. 6C depicts IMU 3-axis angular rate data acquired during the third pickup event.

During the third pickup event, power tool 100 is moved from rest position 300 to handheld position 600 by rotating power tool 100 about 3^{rd} axis 603 (generally from back to front).

IMU sensor data plot 610 presents 3-axis acceleration data (g) over time (about 3 seconds) including 1^{st} axis acceleration data 614, 2^{nd} axis acceleration data 616, and 3^{rd} axis acceleration data 618. Reference line 612 provides a reference to 0 g.

During the initial 0.75 seconds, the acceleration data for each axis falls below reference line 612, and generally aligns with the acceleration data presented in IMU sensor data plot 310. More particularly, during the initial 0.75 seconds, 1^{st} axis acceleration data 614 aligns with 1^{st} axis acceleration data 314, 2^{nd} axis acceleration data 616 aligns with 2^{nd} axis acceleration data 316, and 3^{rd} axis acceleration data 618 aligns with 3^{rd} axis acceleration data 318. The 3-axis acceleration data represent the orientation of power tool 100, and confirm that power tool 100 is disposed in rest position 300 during the initial 0.75 seconds.

During the next 0.75 seconds, the acceleration data reflect the rotation of power tool 100 about 3^{rd} axis 603 from rest position 300 to handheld position 600. More particularly, 1^{st} axis acceleration data 614 changes from a negative value to a large positive value, 2^{nd} axis acceleration data 616 essentially fluctuates about the previous negative value, and 3^{rd} axis acceleration data 618 changes from a large negative value to the same value as 2^{nd} axis acceleration data 616.

During the final 1.5 seconds, the 3-axis acceleration data stabilize, and represent the orientation of power tool 100 in handheld position 600. As explained in more detail below, the change in the orientation of power tool 100 from rest position 300 to handheld position 600 may be determined from the dot product of the normalized 3-axis acceleration data for rest position 300 and the normalized 3-axis acceleration data for handheld position 600. When the change in the orientation of power tool 100 from rest position 300 to handheld position 600 is greater than a threshold, then a pickup event that is associated with an imminent use of power tool 100 is detected, and controller 152 spins up motor 160 to the target speed. As described above, motor 160 may have a speed of zero rpm, or motor 160 may be coasting down from the full operating speed from a prior operation. Conversely, when the change in the orientation of power tool 100 from rest position 300 to handheld position 600 is less than the threshold, then an event (such as a pickup or other event) has been detected that is not associated with an imminent use of power tool 100.

IMU sensor data plot 620 presents 3-axis angular rate data (deg/sec) over time (about 3 seconds) including 1^{st} axis angular rate data 624, 2^{nd} axis angular rate data 626, and 3^{rd} axis angular rate data 628. Reference line 622 provides a reference to 0 deg/sec.

During the initial 0.75 seconds, the angular rate data for each axis falls directly on reference line 622, which indicates that the angular rate data for each axis is zero. These data are consistent with the power tool 100 being quiescent while in rest position 300.

During the next 0.75 seconds, the angular rate data record the rotation of power tool 100 about 3^{rd} axis 603 from rest position 300 to handheld position 600. More particularly, 1^{st} axis angular rate data 624 rises to a positive local peak value and fluctuates about zero, 2^{nd} axis angular rate data 626 rises to a local positive peak value and then returns to zero, and 3^{rd} axis angular rate data 628 falls to a local negative peak value and then returns to zero.

During the final 1.5 seconds, the angular rate data stabilize about zero. These data are consistent with the power tool 100 being quiescent while in handheld position 600.

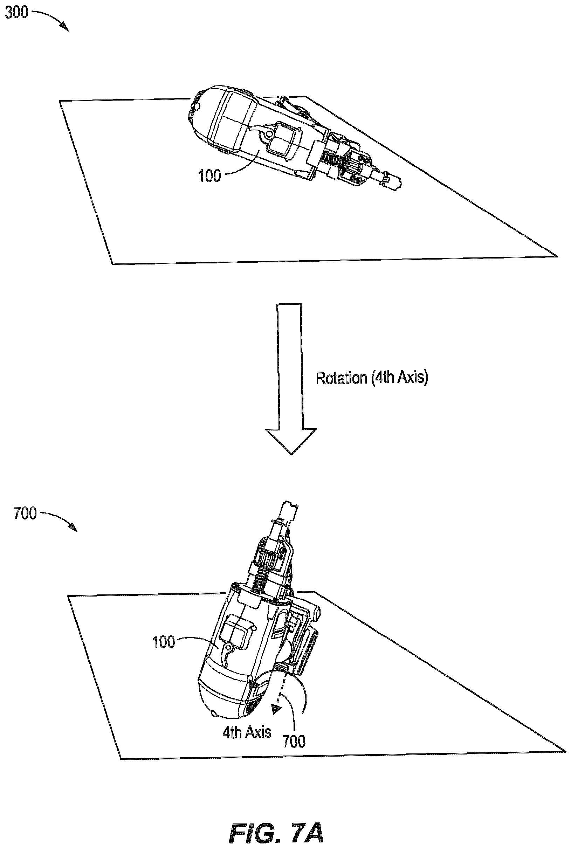

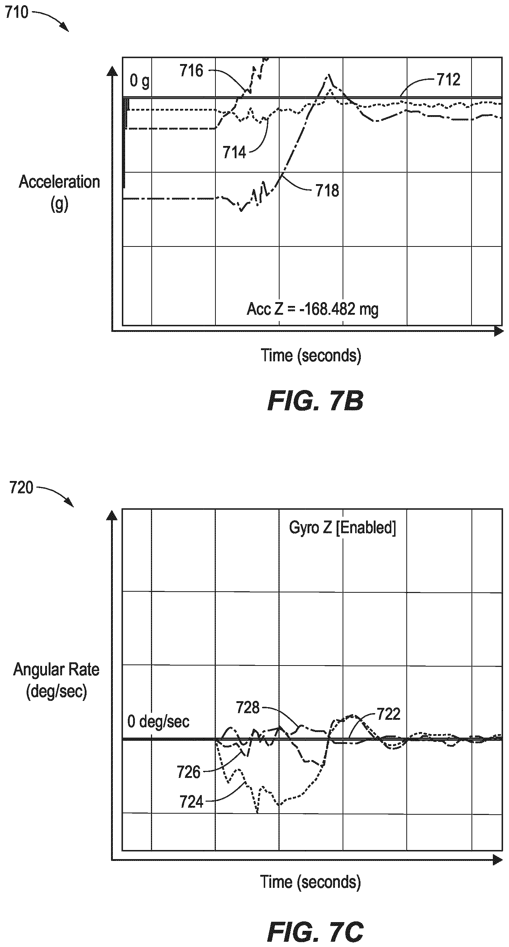

FIG. 7A depicts the movement of power tool 100 during a fourth pickup event, FIG. 7B depicts IMU 3-axis accelerometer data acquired during the fourth pickup event, and FIG. 7C depicts IMU 3-axis angular rate data acquired during the fourth pickup event.

During the fourth pickup event, power tool 100 is moved from rest position 300 to handheld position 700 by rotating power tool 100 about 4^{th} axis 704 (generally from right to left).

IMU sensor data plot 710 presents 3-axis acceleration data (g) over time (about 3 seconds) including 1^{st} axis acceleration data 714, 2^{nd} axis acceleration data 716, and 3^{rd} axis acceleration data 718. Reference line 712 provides a reference to 0 g.

During the initial 0.75 seconds, the acceleration data for each axis falls below reference line 712, and generally aligns with the acceleration data presented in IMU sensor data plot 310. More particularly, during the initial 0.75 seconds, 1^{st} axis acceleration data 714 aligns with 1^{st} axis acceleration data 314, 2^{nd} axis acceleration data 716 aligns with 2^{nd} axis acceleration data 316, and 3^{rd} axis acceleration data 718 aligns with 3^{rd} axis acceleration data 318. The 3-axis acceleration data represent the orientation of power tool 100, and confirm that power tool 100 is disposed in rest position 300 during the initial 0.75 seconds.

During the next second, the acceleration data record the rotation of power tool 100 about 4^{th} axis 704 from rest position 300 to handheld position 700. More particularly, 1^{st} axis acceleration data 714 essentially fluctuates about the previous negative value, 2^{nd} axis acceleration data 716 rises to a large positive value, and 3^{rd} axis acceleration data 718 changes from a large negative value to a small positive value.

During the final 1.25 seconds, the 3-axis acceleration data stabilize, and represent the orientation of power tool 100 in handheld position 700. As explained in more detail below, the change in the orientation of power tool 100 from rest position 300 to handheld position 700 may be determined from the dot product of the normalized 3-axis acceleration data for rest position 300 and the normalized 3-axis acceleration data for handheld position 700. When the change in the orientation of power tool 100 from rest position 300 to handheld position 700 is greater than a threshold, then a pickup event that is associated with an imminent use of power tool 100 is detected, and controller 152 spins up motor 160 to the target speed. As described above, motor 160 may have a speed of zero rpm, or motor 160 may be coasting down from the full operating speed from a prior operation. Conversely, when the change in the orientation of power tool 100 from rest position 300 to handheld position 700 is less than the threshold, then an event (such as a pickup or other event) has been detected that is not associated with an imminent use of power tool 100.

IMU sensor data plot 720 presents 3-axis angular rate data (deg/sec) over time (about 3 seconds) including 1^{st} axis angular rate data 724, 2^{nd} axis angular rate data 726, and 3^{rd} axis angular rate data 728. Reference line 722 provides a reference to 0 deg/sec.

During the initial 0.75 seconds, the angular rate data for each axis falls directly on reference line 722, which indicates that the angular rate data for each axis is zero. These data are consistent with the power tool 100 being quiescent while in rest position 300.

During the next 0.75 seconds, the angular rate data record the rotation of power tool 100 about 4^{th} axis 704 from rest position 300 to handheld position 700. More particularly, 1^{st} axis angular rate data 724 falls to a negative local peak value and rise to about zero, 2^{nd} axis angular rate data 726 generally fluctuates about zero, and 3^{rd} axis angular rate data 728 generally fluctuates about zero.

During the final 1.5 seconds, the angular rate data generally fluctuate about zero. These data are consistent with the power tool 100 being quiescent while in handheld position 700.

As described above, when power tool 100 is disposed in a rest position, motor 160 is not powered (zero rpm), and controller 152 determines an initial orientation with respect to the local gravity vector. The initial orientation is represented by a stable orientation vector that is based on the 3-axis acceleration data. When the user picks up and rotates power tool 100 into a handheld position, controller 152 determines the new orientation with respect to the local gravity vector. The new orientation is represented by a new orientation vector that is based on the 3-axis acceleration data. Controller 152 then determines the vector dot product between the stable orientation vector and new orientation vector, and, when the vector dot product is above a predetermined threshold, controller 152 increases the speed of motor 160, for example, from zero rpm to the target speed (such as 8,000 rpm, 12,000 rpm, 15,000 rpm, 20,000 rpm, etc.) to prepare for operation by the user. Note that, herein, the term "predetermined threshold" refers to a threshold that can be defined (e.g., set, selected, tuned, etc.) by a user, a manufacturer, etc.

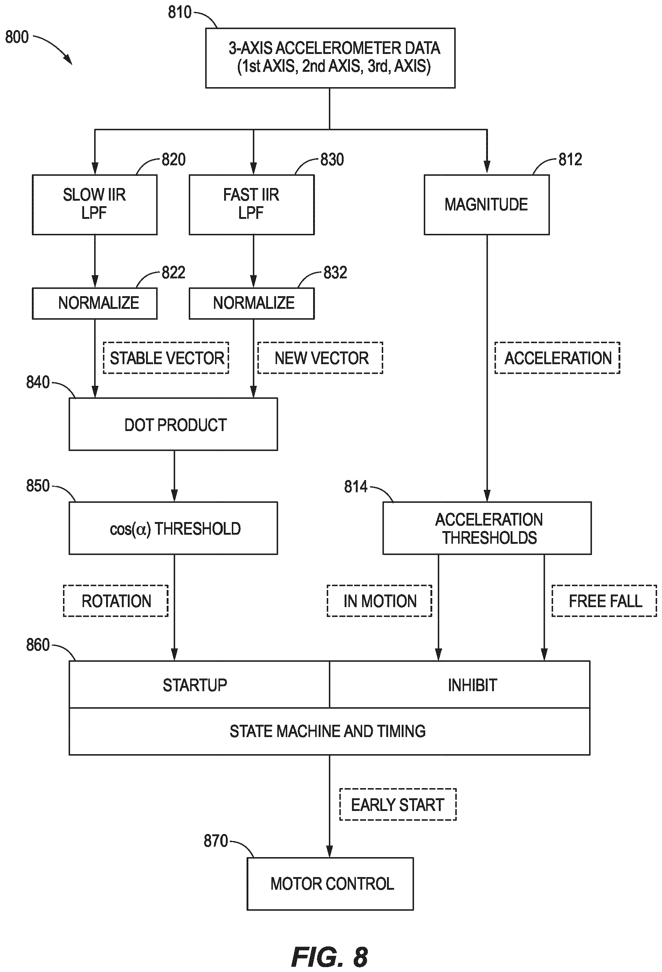

FIG. 8 depicts example flow chart 800 illustrating functionality associated with control system 150a, 150b, in accordance with embodiments of the present disclosure.

Generally, two parallel flows are depicted between block 810 and block 860. The first flow (shown on the left) determines whether the vector dot product between the stable orientation vector and the new orientation vector is above a predetermined threshold, and includes blocks 820, 822, 830, 832, 840, and 850. The second flow (shown on the right) determines whether power tool 100 is experiencing other movements, such as transportation in a vehicle, transportation by a user, a free fall condition, etc., and includes blocks 812 and 814.

The functionality depicted in FIG. 8 is performed by control system 150a, 150b.

In the embodiment depicted in FIG. 2A, IMU 170a performs the functionality described for block 810, and controller 152 performs the functionality described for blocks 812, 814, 820, 822, 830, 832, 840, 850, 860, and 870. In certain embodiments, memory 154 stores instructions that are executed by controller 152 to perform the functionality described for blocks 812, 814, 820, 822, 830, 832, 840, 850, 860, and 870. In other embodiments, the functionality described for blocks 812, 814, 820, 822, 830, 832, 840, 850, 860, and 870 may be performed by a combination of one or more hardware modules and controller instructions stored in memory 154.

In the embodiment depicted in FIG. 2B, IMU 170b may perform the functionality described for blocks 810, 812, 814, 820, 822, 830, 832, 840, and 850, and controller 152 may perform the functionality described for blocks 860 and 870. Alternatively, IMU 170b may perform the functionality described for block 810 (similar to IMU 170a), and controller 152 may perform the functionality described for blocks 812, 814, 820, 822, 830, 832, 840, 850, 860, and 870.

At block 810, IMU 170a, 170b outputs 3-axis accelerometer data to a controller. For example, in the embodiment depicted in FIG. 2A, IMU 170a may output 3-axis accelerometer data to controller 152. Alternatively, IMU 170b may output (provide) 3-axis accelerometer data to ML controller 172 (in one embodiment depicted in FIG. 2B), or IMU 170b may output 3-axis accelerometer data to controller 152 (in another embodiment depicted in FIG. 2B). The 3-axis accelerometer data is provided to blocks 820, 830 in the first flow, and to block 812 in the second flow.

With respect to the first flow, at block 820, a slow infinite impulse response (IIR) low pass filter (LPF) is applied to each axis of the 3-axis accelerometer data to generate slow filtered 3-axis accelerometer data. In other words, each axis of the 3-axis accelerometer data may be processed to generate processed 3-axis accelerometer data at block 820. The fast IIR LPF attenuates even more undesirable high frequency noise from the 3-axis accelerometer data. The impulse response of the slow IIR LPF may be in a range of, for example, about 2% to 5%, while the frequency response of the fast IIR LPF depends on the sampling rate of the 3-axis accelerometer data. The cutoff frequency (e.g., -3 dB) of the fast IIR LPF may be in a range of, for example, about 0.25 Hz to about 0.05 Hz. The slow filtered 3-axis accelerometer data provides a measurement of a longer-term orientation of power tool 100 with respect to the local gravity vector. In other words, the slow filtered 3-axis accelerometer data is a stabilized measurement of the past orientation of power tool 100. Other types of digital filters may also be used. The slow filtered 3-axis accelerometer data is provided to block 822.

At block 822, the slow filtered 3-axis accelerometer data is normalized to a unit vector to generate a normalized slow vector. While the magnitude is normalized to an amplitude of 1.0, the orientation is retained, which simplifies the relative angle calculation. The normalized slow vector is the stable orientation vector described above, and is provided to block 840.

With respect to the first flow, at block 830, a fast IIR LPF is applied to each axis of the 3-axis accelerometer data to generate fast filtered 3-axis accelerometer data. In other words, each axis of the 3-axis accelerometer data may be processed to generate processed 3-axis accelerometer data at block 830. The fast IIR LPF attenuates undesirable high frequency noise from the 3-axis accelerometer data, which may be caused by physical vibrations and fast motion of power tool 100. The impulse response of the fast IIR LPF may be in a range of about 10% to about 30%, while the frequency response of the fast IIR LPF depends on the sampling rate of the 3-axis accelerometer data. The cutoff frequency (-3 dB) of the fast IIR LPF may be in a range of about 1.5 Hz to about 0.5 Hz. Other types of digital filters may also be used. The fast filtered 3-axis accelerometer data is provided to block 832.

At block 832, the fast filtered 3-axis accelerometer data is normalized to a unit vector to generate a normalized fast vector. While the magnitude is normalized to an amplitude of 1.0, the orientation is retained, which simplifies the relative angle calculation. The normalized fast vector is the new orientation vector described above, and is provided to block 850.

In certain embodiments, 3-axis angular rate data may provide insights into certain aspects of the slow IIR LPF and the fast IIR LPF. For example, the total angular rate may be determined from the 3-axis angular rate data, and the slope of the total angular rate (also known as the change in the total angular rate) may be compared to certain thresholds. Preferably, the slope of the total angular rate is large enough (e.g., greater than a first threshold) to not affect the stable orientation vector determined by the slow IIR LPF, but small enough (e.g., less than a second threshold that is greater than the first threshold) to pass through the fast IIR LPF. A change in the total angular rate that is too small or too large may impact the performance of the slow IIR LPF and the fast IIR LPF, which may be monitored by control system 150a, 150b.

At block 840, a vector dot product is calculated from the normalized slow vector and the normalized fast vector, which is equal to the cosine of the angle between the stable orientation vector and the new orientation vector. The vector dot product is provided to block 850. In certain embodiments, an arccosine function may be applied to the vector dot product to generate the angle between the stable orientation vector and the new orientation vector, and the angle may be provided to block 850.

The angle between the normalized fast vector and the normalized slow vector is time dependent due to the characteristics of the fast IIR LPF and the slow IIR LPF. Slow angular motion will pass through both filters, and no net rotation (angle) will be detected. Very fast angular motion will be attenuated by both filters, and no net rotation (angle) will be detected. Advantageously, angular motion at a desired rate will pass through the fast IIR LPF but not the slow IIR LPF, and a net rotation (angle) will be detected.

At block 850, the vector dot product received from block 840 is compared to a predetermined threshold in the form of cos(α), where α is the rotation (angle) necessary to detect the desired motion. In other words, whether the power tool has been moved in a pickup motion that is associated with an imminent use of power tool 100 may be detected at block 850.

Generally, α may be in a range of about, for example, 30° to 60°, such as 45°, such that the predetermined threshold may be in a range between, for example, about 0.500 and about 0.866, such as 0.707. When the vector dot product exceeds the predetermined threshold, a rotation indication is set to indicate rotation, and when the vector dot product does not exceed the predetermined threshold, the rotation indication is set to indicate no rotation. The rotation indication may be a software flag or variable, a controller register value (for example, a bit), etc. Flow proceeds to block 860.

In certain embodiments, an angle may be received from block 840, and the angle may be compared to a predetermined threshold in the form of α, which may be in a range of, for example, about 30° to 60°, such as about 45°. When the angle exceeds the predetermined threshold, the rotation indication is set to indicate rotation, and when the angle does not exceed the predetermined threshold, the rotation indication is set to indicate no rotation. The rotation indication is provided to block 860.

With respect to the second flow, at block 812, the total acceleration of power tool 100 is calculated based on the 3-axis acceleration data without delay or filtering to generate an acceleration magnitude. The acceleration magnitude is a scalar value without directional information (orientation). The acceleration magnitude is provided to block 814.

At block 814, the acceleration magnitude is compared to a predetermined high threshold and a predetermined low threshold.

When the acceleration magnitude exceeds the predetermined high threshold (such as 1.5 g), the acceleration magnitude is greater than the magnitude of the local gravity vector (about 1 g), and power tool 100 is experiencing abnormally high acceleration levels caused by heavy vibration, etc. When power tool 100 is experiencing acceleration magnitudes greater than the magnitude of the local gravity vector, the vector dot product will be incorrect, and a first inhibit indication is set to indicate inhibit. The first inhibit indication may be a software flag or variable, a controller register value, etc. When the acceleration magnitude does not exceed the predetermined high threshold, the first inhibit indication is set to indicate permit. The first inhibit indication is then provided to block 860.

When the acceleration magnitude is less than the predetermined low threshold (such as 0.5 g), power tool 100 may be in a free fall condition, the 3-axis acceleration data will be incorrectly correlated to the local gravity vector, and a second inhibit indication is set to indicate inhibit. The second inhibit indication may be a software flag or variable, a controller register value, etc. When the acceleration magnitude exceeds the predetermined low threshold, the second inhibit indication is set to indicate permit. The second inhibit indication is then provided to block 860.

At block 860, the rotation indication is inspected. When the rotation indication is set to rotation, then the first inhibit indication and the second inhibit indication are inspected. When the first inhibit indication and the second inhibit indication are set to permit, flow proceeds to block 870. When either the first inhibit indication or the second inhibit indication is set to inhibit, flow returns to block 810. Similarly, when the rotation indication is set to no rotation, flow returns to block 810.

At block 870, a signal is sent from controller 152 to motor 160 to increase the motor speed, for example, from zero revolutions per minute (rpm) to the target speed (such as 8,000 rpm, 12,000 rpm, 15,000 rpm, 20,000 rpm, etc.) to prepare for operation by the user.

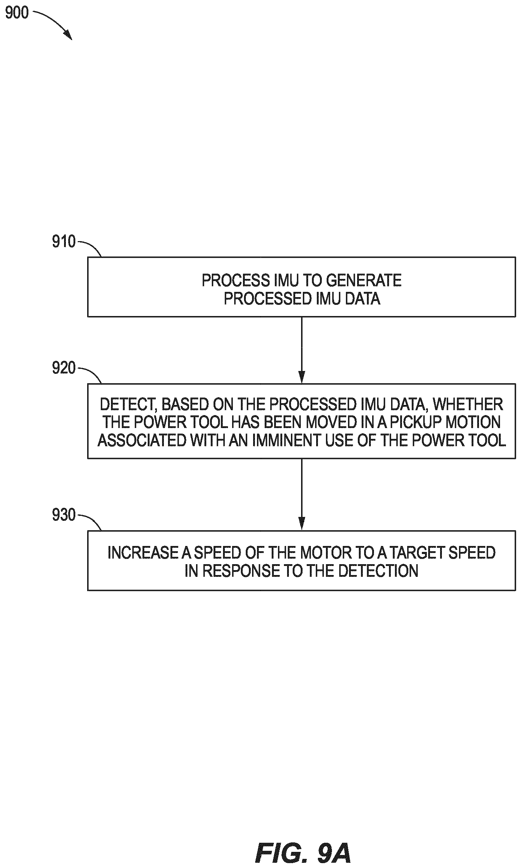

FIG. 9A depicts flow chart 900 illustrating functionality associated with controller 152, in accordance with embodiments of the present disclosure.

At block 910, the data output by IMU 170a (or IMU 170b) is processed to generate processed IMU data, as discussed above with respect to FIG. 8, etc. In certain embodiments, the IMU data include at least 3-axis accelerometer data. Flow proceeds to block 920.

At block 920, whether the power tool has been moved in a pickup motion that is associated with an imminent use of power tool 100 is detected based on the processed IMU data, as discussed above with respect to FIG. 8, etc. Flow proceeds to block 930.

At block 930, the speed of motor 160 is increased to a target speed in response to the detection, as discussed above with respect to FIG. 8, etc. For example, a signal may be sent from controller 152 to motor 160 to increase the motor speed, for example, from zero revolutions per minute (rpm) to the target speed (such as 8,000 rpm, 12,000 rpm, 15,000 rpm, 20,000 rpm, etc.) to prepare for operation by the user.

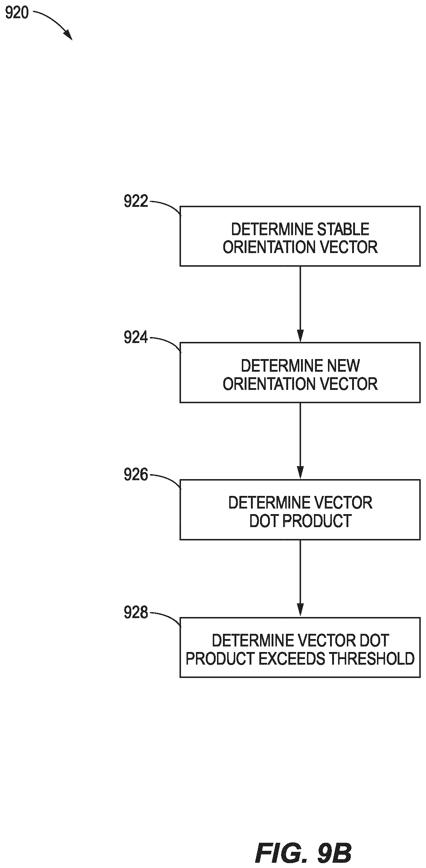

FIG. 9B depicts certain functionality associated with controller 152, in accordance with embodiments of the present disclosure. More particularly, FIG. 9B depicts functionality associated with block 920 of FIG. 9A, in accordance with embodiments of the present disclosure. In certain embodiments, the IMU data include 3-axis accelerometer data.

At block 922, a stable orientation vector is determined based on the processed IMU data, as discussed above with respect to FIG. 8, etc.

At block 924, a new orientation vector is determined based on the processed IMU data, as discussed above with respect to FIG. 8, etc.

At block 926, a vector dot product is determined from the stable orientation vector and the new orientation vector, as discussed above with respect to FIG. 8, etc.

At block 928, the vector dot product is compared to a predetermined threshold, for example, in the form of cos(α), where α is the rotation (angle) necessary to detect the desired motion, as discussed above with respect to FIG. 8, etc. In certain embodiments, α may be in a range of about 30° to 60°, such as 45°, such that the predetermined threshold may be in a range between about 0.500 and about 0.866, such as 0.707.

When the vector dot product exceeds the predetermined threshold, a pickup event that is associated with an imminent use of power tool 100 has been detected. Conversely, when the vector dot product does not exceed the predetermined threshold, an event that is not associated with an imminent use of power tool 100 has been detected.

Certain additional movements of power tool 100 are worth noting. For example, when power tool 100 is transported in a vehicle, the movement should not cause controller 152 to spin up motor 160 as described above. Because cars and trucks generally travel with all of their wheels on the ground, fast angular rotation out of a normal plane is unlikely. Rotation about the local gravity vector is expected when the vehicle turns a corner. In other words, vehicle transportation generates little net rotation away from the local gravity vector.

For another example, when power tool 100 is carried by the user around a job site, to and from a vehicle, etc., these movement events generate a repetitive bouncing motion in the 3-axis acceleration data. Advantageously, the fast IIR LPF smooths the 3-axis acceleration data, and significant relative rotation is not often seen during normal walking. Accordingly, the total angle of rotation from an initial orientation to a new orientation for movement events should not cause controller 152 to detect a pickup event that is associated with an imminent use of power tool 100 and spin up motor 160 as described above.

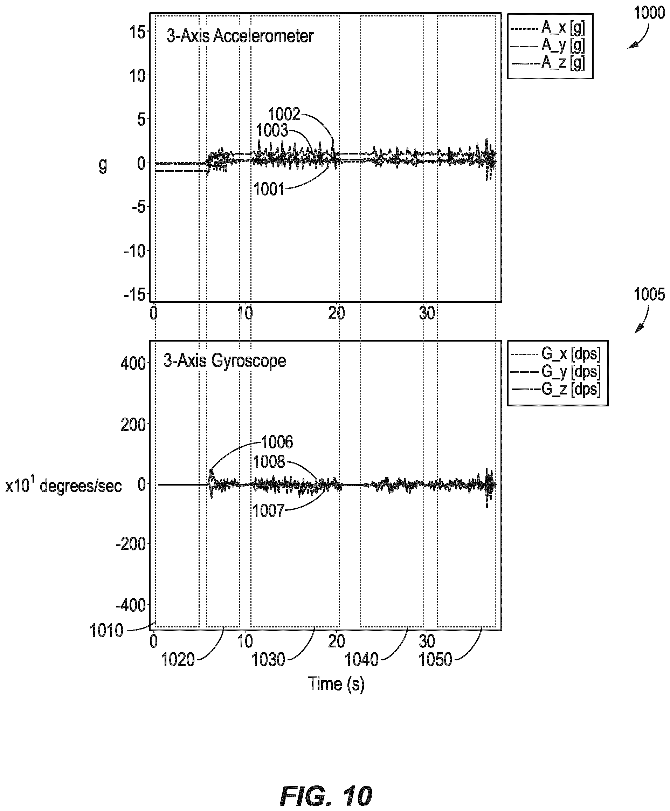

FIG. 10 depicts example IMU data acquired during rest event 1010 and movement events 1020, 1030, 1040, 1050, in accordance with embodiments of the present disclosure.

IMU sensor data plot 1000 presents 3-axis acceleration data (g) over time (about 40 seconds) including 1^{st} axis acceleration data 1001, 2^{nd} axis acceleration data 1002, and 3^{rd} axis acceleration data 1003. IMU sensor data plot 1005 presents 3-axis angular rate data (degrees / sec) over time (about 40 seconds) including 1^{st} axis angular rate data 1006, 2^{nd} axis angular rate data 1007, and 3^{rd} axis angular rate data 1008.

During rest event 1010, power tool 100 is at rest. During movement event 1020, power tool 100 is picked up and then attached to the user's belt without significant rotation. During movement event 1030, the user is walking with power tool 100 attached to his belt. During movement event 1040, the user is climbing a ladder with power tool 100 attached to his belt. During movement event 1050, the user is descending the ladder with power tool 100 attached to his belt. Power tool 100 is disposed in a non-powered state during rest event 1010 and movement events 1020, 1030, 1040, 1050. Generally, the 3-axis acceleration data, and to a lesser extent the 3-axis angular rate data, may provide insights into the acceleration and angular rate environments of power tool 100 during rest and movement events.

During rest event 1010, the peak absolute acceleration value of all 3 axes is less than or equal to 1 g, and the peak absolute angular rate value of all 3 axes is substantially close to 0 degrees / sec. During movement events 1020, 1030, 1040, 1050, the movement observable in the 3-axis acceleration data exhibits either a non-uniform pattern corresponding to sudden and isolated movements of power tool 100, or a patterned behavior corresponding to movement of power tool 100 due to walking, climbing, or descending, but one having a frequency that is significantly smaller than a frequency seen during operation of power tool 100.

For example, during movement event 1030, a walking cadence may be observed in at least one axis of the 3-axis acceleration data, but the frequency of the walking cadence (e.g., smaller than or equal to approximately 7 Hz) will be significantly lower than a frequency domain of an operating state of power tool 100 (e.g., greater than or equal to approximately 15 Hz). During movement event 1040, a climbing cadence may be observed in at least one axis of the 3-axis acceleration data corresponding to each step of the climb, but once again the frequency of the climbing cadence will be significantly lower than the frequency domain of an operating state of power tool 100. During movement event 1050, a descending cadence may be observed in at least one axis of the 3-axis acceleration data with a similarly small frequency.

During movement events 1020, 1030, 1040, 1050, a repeated pattern of each of the individual 3-axis acceleration data 1001, 1002, 1003 plot lines remains within a predetermined acceleration movement zone defined by an upper threshold and a lower threshold (e.g., approximately +3 g and -3 g). Similarly, a repeated pattern of each of the individual 3-axis angular rate data 1006, 1007, 1008 plot lines remain within a predetermined angular rate movement zone defined by an upper threshold and a lower threshold (e.g., approximately +100 deg/sec and -100 deg/sec). Furthermore, during movement events 1020, 1030, 1040, 1050, at least where a patterned behavior is exhibited, the sum of the amplitudes of the 3-axis acceleration data 1001, 1002, 1003 remains within a predetermined acceleration movement zone defined by an upper threshold and a lower threshold (e.g., approximately +6 g and -6 g). Similarly, the sum of the 3-axis angular rate data 1006, 1007, 1008 remains within a predetermined angular rate movement zone defined by an upper threshold and a lower threshold (e.g., approximately +100 deg/sec and -100 deg/sec). Moreover, during movement events 1020, 1030, 1040, 1050, at least where a patterned behavior is exhibited, the RMS (Room Mean Square) of the amplitudes of the 3-axis acceleration data 1001, 1002, 1003 remains within a predetermined acceleration movement RMS zone, and the RMS of the 3-axis angular rate data 1006, 1007, 1008 remains within a predetermined angular rate movement RMS zone.

Controller 152 (and ML controller 172) may use any of these parameters or combinations thereof to distinguish between movement events and pickup events that are associated with an imminent use of power tool 100. Controller 152 (and ML controller 172) may also detect occurrences of isolated and unrepeated events within movement events (such as lifting power tool 100 from a stationary position to a handheld position, attaching power tool 100 to the user's belt, removing power tool 100 from the user's belt, etc.) based on isolated high-amplitude spikes in one or more of the 3-axis acceleration data 1001, 1002, 1003 and/or the 3-axis angular rate data 1006, 1007, 1008.

Advantageously, detection of a pickup event that is associated with an imminent use of power tool 100 may be used for other purposes, such as activating an LED headlight on power tool 100, recording a data logging event in memory 154, activating a user interface on power tool 100, etc. Similarly, not detecting the power tool pickup event that is associated with an imminent use of power tool 100 may be used for other purposes, such as blocking operation of a function of power tool 100, data logging of idle time in memory 154, etc.

In certain embodiments, controller 152 (and ML controller 172) may be configured to determine whether to increase the speed of the motor from zero revolutions per minute (rpm) to a target speed in a different manner. For example, in some embodiments, the stable orientation vector is first determined, and then a stable roll angle and a stable pitch angle are calculated based on the stable orientation vector. The new orientation vector is determined at regular intervals, and a new roll angle and a new pitch angle are calculated based on the new orientation vector. A rate of angle change (or angular velocity) is calculated for the roll axis based on the stable roll angle and the new roll angle, and a rate of angle change (or angular velocity) for the pitch axis is calculated based on the stable pitch angle and the new pitch angle. Each angular velocity is then compared to a threshold. If at least one angular velocity exceeds the threshold, then controller 152 spins up motor 160. In the cordless nailer case, motor 160 is energized and the integrated flywheel comes up to the target speed, as described above.

In certain embodiments, controller 152 (and ML controller 172) may periodically update the stable orientation vector to compensate for slow motions and sensor errors. The stable orientation vector represents any resting position for power tool 100, such as upright, sideways, etc. Advantageously, the user may place power tool 100 in any resting position and orientation, and control system 150a, 150b will detect the pickup event.

If the stable orientation vector cannot be established by the control system 150a, 150b, then in certain embodiments power tool 100 remains in an idle state to prevent undesired start-up in certain conditions, such as free fall, heavy vibration, etc.

When power tool 100 is transported in a vehicle, the movement should not cause controller 152 to spin up motor 160, as described above. Because travel in a vehicle is generally within a horizontal plane, vehicle turns are performed in the yaw axis, and this motion is unobserved by control system 150. A sudden and large change of roll angle or pitch angle in a vehicle is unlikely.

Lateral motion does not change the orientation angle with respect to the local gravity vector, and should not be detected as a change of roll angle or pitch angle. However, strong acceleration in a vehicle may briefly affect the 3-axis acceleration data, which could cause an erroneous angular velocity. Advantageously, 3-axis angular rate data, output by a 3-axis gyroscope, may be used with the 3-axis acceleration data to identify and ignore lateral accelerations. In certain embodiments, the 3-axis gyroscope may also be used to measure the change in roll or pitch angles.

In various embodiments, machine learning (ML) and pattern recognition may be applied to processing the 3-axis acceleration data to improve the performance of control system 150b. For example, during development, 3-axis acceleration data may be recorded in a variety of operating and non-operating environments. Control system 150b (more particularly ML controller 172) may be trained to categorize the motion environment, and then use the training framework to identify desired motions and undesired motions.

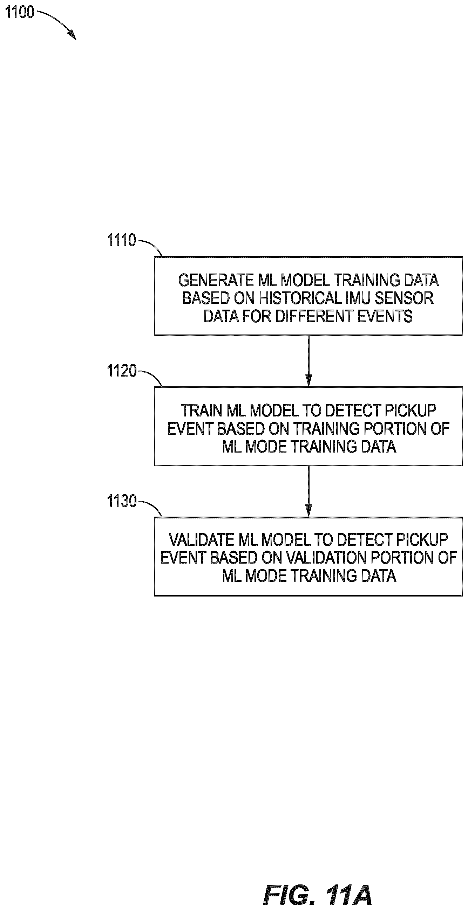

FIG. 11A depicts flow chart 1100 illustrating functionality associated with training an ML model to detect a pickup event, in accordance with embodiments of the present disclosure.

At block 1110, a model training system generates ML model training data based on historical IMU sensor data acquired for power tools that experienced different events, such as rest events, pickup events, movement events, etc. In certain embodiments, the model training system includes, *inter alia,* a network server with a communications bus that couples one or more processors, memories, storage devices, communication interfaces, and input/output interfaces. The storage device may store model training data, as discussed below.

More particularly, the historical IMU sensor data for each power tool includes at least 3-axis acceleration data that were acquired when the power tool experienced the different events. In certain embodiments, the historical IMU sensor data may also include 3-axis angular rate data that were acquired when the power tool experienced the different events. A different label is then associated with the data acquired during each event to identify the event for training purposes.

In certain embodiments, a first orientation vector and a second orientation vector for each event may be determined based on the 3-axis acceleration data. For example, for a rest event, the first orientation vector and the second orientation vector would be the same and correspond to a rest position. For a pickup event that is associated with an imminent use of the power tool, the first orientation vector and the second orientation vector would be different, and the rotation (angle) between the two orientation vectors would indicate pickup motion that is associated with an imminent use of the power tool. The first orientation vector would correspond to a rest position and the second orientation vector would correspond to a handheld position. For a movement event, the first orientation vector and the second orientation vector may be the same (or different), but the rotation (angle) between the two orientation vectors may indicate pickup motion that is not associated with an imminent use of the power tool. The first and second orientation vectors would correspond to handheld (or belt-held) positions. Flow proceeds to block 1120.

At block 1120, the model training system trains the ML model to detect (predict, classify, etc.) the pickup event that is associated with an imminent use of the power tool based on a training portion of the ML model training data. In certain embodiments, an ML model is trained to detect a single event (such as a pickup event that is associated with an imminent use of the power tool or not a pickup event that is associated with an imminent use of the power tool), while in other embodiments, the ML model is trained to detect the type of event, such as a rest event, a movement event, a pickup event that is not associated with an imminent use of the power tool, a pickup event that is associated with an imminent use of the power tool, etc. Flow proceeds to block 1130.

At block 1130, the model training system validates the ML model to detect (predict, classify, etc.) the pickup event that is associated with an imminent use of a power tool, based on a validation portion of the ML model training data that is different than the training portion of the ML model training data. Validating the ML model includes evaluating the performance of the ML model using different training data, and then tuning the ML model parameters to produce the best performance.

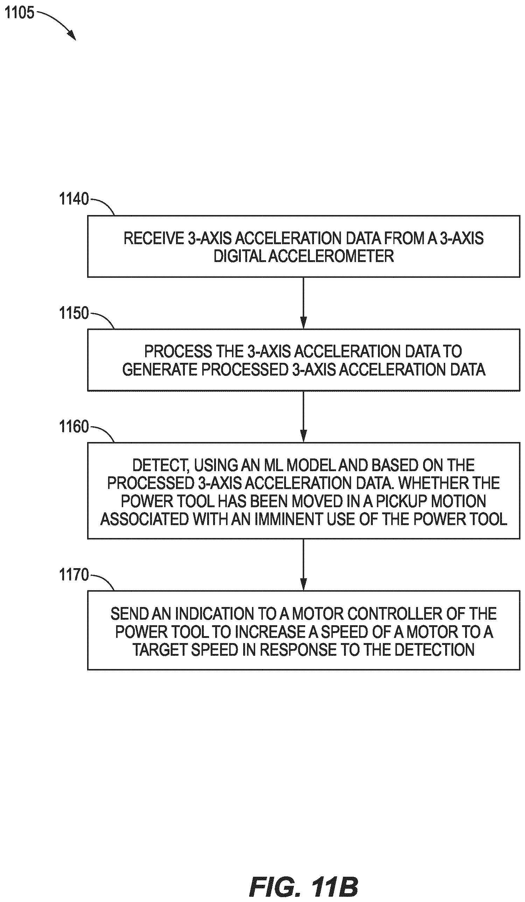

FIG. 11B depicts flow chart 1105 illustrating functionality associated with using an ML model to detect (predict, classify, etc.) a pickup event, in accordance with embodiments of the present disclosure. The functionality depicted in FIG. 11B may be performed by ML controller 172.

At block 1140, 3-axis acceleration data are received from a 3-axis digital accelerometer (such as 3-axis digital accelerometer 176), as discussed above.

At block 1150, the 3-axis acceleration data is processed to generate processed 3-axis acceleration data, as discussed above.

At block 1160, whether power tool 100 has been moved in a pickup motion that is associated with an imminent use of power tool 100 is detected (predicted, classified, etc.) using the ML model and based on the processed 3-axis acceleration data, as discussed above.

At block 1170, an indication is sent to motor controller 152 of power tool 100 to increase a speed of motor 160 to a target speed when the pickup motion associated with an imminent use of power tool 100 is detected, as discussed above.

Example embodiments have been provided so that this disclosure will be thorough, and to fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Terms of degree such as "generally," "substantially," "approximately," and "about" may be used herein when describing the relative positions, sizes, dimensions, or values of various elements, components, regions, layers and/or sections. These terms mean that such relative positions, sizes, dimensions, or values are within the defined range or comparison (e.g., equal or close to equal) with sufficient precision as would be understood by one of ordinary skill in the art in the context of the various elements, components, regions, layers and/or sections being described.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A power tool, comprising:
a motor;
an inertial measurement unit (IMU) configured to output IMU data; and
a controller coupled to the motor and the IMU, the controller configured to:
process the IMU data to generate processed IMU data,
detect, based on the processed IMU data, whether the power tool has been moved in a prescribed pickup motion that is associated with an imminent use of the power tool, and
increase a speed of the motor to a target speed in response to the detection.

2. The power tool of claim 1, wherein the target speed is less than a full operating speed of the motor.

3. The power tool of claim 1 or 2, wherein:
the IMU includes a 3-axis accelerometer, the IMU data include 3-axis acceleration data, and the processed IMU data include processed 3-axis acceleration data; and
the controller being configured to detect whether the power tool has been moved in a pickup motion includes the controller being configured to:
determine a first orientation vector based on the processed 3-axis acceleration data,
determine a second orientation vector based on the processed 3-axis acceleration data,
determine a vector dot product of the first orientation vector and the second orientation vector, and
based on determining that the vector dot product exceeds a predetermined threshold, increase the speed of the motor to the target speed.

4. The power tool of claim 3, wherein:
the controller being configured to process the IMU data to generate processed IMU data includes the controller being configured to:
apply a slow filter to the 3-axis acceleration data to generate slow filtered 3-axis acceleration data, and
apply a fast filter to the 3-axis acceleration data to generate fast filtered 3-axis acceleration data;
the controller being configured to determine the first orientation vector includes the controller being configured to normalize the slow filtered 3-axis acceleration data to generate the first orientation vector; and
the controller being configured to determine the second orientation vector includes the controller being configured to normalize the fast filtered 3-axis acceleration data to generate the second orientation vector.

5. The power tool of claim 3 or 4, wherein the predetermined threshold is between about 0.500 and about 0.866.

6. The power tool of any of claims 3 to 5, wherein the controller is further configured to determine an angle between the first orientation vector and the second orientation vector based on the vector dot product.

7. The power tool of any of claims 3 to 6, wherein the controller is further configured to:
determine an acceleration magnitude based on the 3-axis acceleration data;
based on determining that the acceleration magnitude exceeds a predetermined high threshold, inhibit the increase of the speed of the motor; and
based on determining that the acceleration magnitude is less than a predetermined low threshold, inhibit the increase of the speed of the motor.

8. The power tool of claim 7, wherein the predetermined high threshold is about 1.5 g, and the predetermined low threshold is about 0.5 g.

9. The power tool of any of claims 3 to 8, wherein:
the first orientation vector corresponds to a rest position of the power tool; and
the second orientation vector corresponds to a handheld position of the power tool when the vector dot product exceeds the predetermined threshold.

10. The power tool of any preceding claim, further comprising:
a driver blade configured to drive nails into a workpiece; and
a driver blade actuator coupled to the driver blade, the driver blade actuator configured to couple the driver blade to the flywheel when a trigger or a contact trip is actuated.

11. The power tool of any preceding claim, wherein the target speed is at least 8,000 rpm.

12. The power tool of claim 11, wherein the target speed is preset to ensure that a speed ramp-up time of the motor is less than or equal to approximately 300 ms.

13. The power tool of claim 1, wherein:
the IMU includes a 3-axis accelerometer, the IMU data includes 3-axis acceleration data, and the processed IMU data includes processed 3-axis acceleration data;
the controller is configured to detect whether the power tool has been moved in the prescribed pickup motion that is associated with imminent use of the power tool using a machine learning (ML) model and based on the processed 3-axis acceleration data;
the controller is configured to send an indication to a motor controller of the power tool to increase the speed of a motor to the target speed in response to the detection; and
wherein the ML model is trained to detect the pickup motion that is associated with an imminent use of the power tool based on ML model training data that include power tool rest events and power tool pickup events.

14. A method for a power tool comprising a motor, an inertial measurement unit (IMU) configured to output IMU data, and a controller coupled to the motor and the IMU, the method comprising:
processing the IMU data to generate processed IMU data;
detecting, based on the processed IMU data, whether the power tool has been moved in a prescribed pickup motion that is associated with an imminent use of the power tool, and
increasing a speed of the motor to a target speed in response to the detection.

15. A method for a power tool, the method comprising:
receiving 3-axis acceleration data from a 3-axis digital accelerometer;
processing the 3-axis acceleration data to generate processed 3-axis acceleration data;
detecting, using a machine learning (ML) model and based on the processed 3-axis acceleration data, whether the power tool has been moved in a prescribed pickup motion that is associated with an imminent use of the power tool; and
sending an indication to a motor controller of the power tool to increase a speed of a motor to a target speed in response to the detection, wherein the ML model is trained to detect the pickup motion that is associated with an imminent use of the power tool based on ML model training data that include power tool rest events and power tool pickup events.
